## Europäisches Patentamt

## European Patent Office

## Office européen des brevets

(19)

(11) Veröffentlichungsnummer: **0 141 991**

**B1**

(12)

# EUROPÄISCHE PATENTSCHRIFT

(45) Veröffentlichungstag der Patentschrift:
12.06.87

(51) Int. Cl.⁴: **A 23 G 3/04,** A 23 G 3/02

(21) Anmeldenummer: **84111595.9**

(22) Anmeldetag: **28.09.84**

(54) **Verfahren und Vorrichtung zum kontinuierlichen Aufbereiten von gekochten und vakuumierten Süsswarenmassen.**

(30) Priorität: **05.10.83 DE 3336187**

(43) Veröffentlichungstag der Anmeldung:
**22.05.85 Patentblatt 85/21**

(45) Bekanntmachung des Hinweises auf die Patenterteilung:
**12.06.87 Patentblatt 87/33**

(84) Benannte Vertragsstaaten:
**GB IT NL SE**

(56) Entgegenhaltungen:
**EP-A-0 054 960**
**DE-A-2 512 423**
**DE-B-1 283 662**
**FR-A-1 367 452**
**NL-A-6 911 876**
**US-A-2 197 919**
**US-A-2 847 311**
**US-A-3 062 661**
**US-A-4 104 412**
**US-A-4 334 934**

(73) Patentinhaber: **Otto Hänsel GmbH, Lister Damm 19, D-3000 Hannover (DE)**

(72) Erfinder: **Mergelsberg, Reinhard, Andreae Strasse 11, D-3008 Garbsen 6 (DE)**

(74) Vertreter: **Patentanwälte Dipl.- Ing. Rudolf Bibrach Dipl.- Ing. Elmar Rehberg, Pütterweg 6 Postfach 738, D-3400 Göttingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Verfahren zur kontinuierlichen Aufbereitung von gekochten und vakuumierten Süßwarenmassen, insbesondere von Bonbonmassen, wie z.B. Weich- oder Hartkaramellmassen, Fondantmassen oder dgl. in einem Mischer, durch welche die zu verarbeitenden Massen bei Zufuhr von Druckluft unter Überdruck hindurchlaufen, und zeigt gleichzeitig eine, das Verfahren durchführende Vorrichtung unter Benutzung einer Kochanlage, wie sie beispielsweise in der DE- C- 1 283 662 beschrieben ist. So beschreibt die DE-C- 25 12 423 bereits eine Vorrichtung mit einem die zu verarbeitende Masse aufnehmenden Mischer, der aus einem Gehäuse mit darin arbeitenden Mischwerkzeugen besteht, wobei an dem Gehäuse ein Drucklufteinlass vorgesehen ist, der es ermöglicht, durch Einarbeiten von Luft die Zuckermasse in ihrem Aussehen und in ihrer Konsistenz zu verbessern. Der Mangel solcher Einrichtungen besteht darin, daß die Luft aus dem Mischer bereits vorzeitig entweicht und damit die Anlage wirkungslos bleibt. Dasselbe gilt für Einrichtungen nach der US- A- 2 197 919, die jedoch nur für die Verarbeitung von kaugummihaltigen Zuckermassen bestimmt ist und voraussetzt, daß ein Minimum an Viskosität der zu verarbeitenden Masse durch ein Maximum an Temperatur aufrechterhalten wird.

Die US- A- 4 104 412 zeigt eine Vorrichtung mit welcher sich belüftete Süßwarenmassen erzeugen lassen. In den Mischerinnenraum wird dazu Druckluft eingeführt. Es ist erforderlich, die Süßwarenmasse am Mischerauslauf gedrosselt austreten zu lassen, damit im Mischerinnenraum die eingeführte Druckluft gehalten und unter die Süßwaren gemischt werden kann. Am Mischerauslauf ist dazu eine Drosselstelle vorgesehen, die durch einen konischen Spalt gebildet ist, dessen Breite sich von außen über ein Handrad verstellen läßt.

Eine Regelung des Druckes im Mischerinnenraum erfolgt nicht. Die ordnungsgemäße Funktion hängt von einer konstanten Viskosität der Zuckermasse ab.

Die NL- A- 69 11 876 zeigt einen Mischer, bei welchem die Druckluft etwa im mittleren Bereich durch eine Leitung eingeführt wird.

Aufgabe der Erfindung ist es, die Mängel der bisher bekannten Anlagen zur Aufbereitung von Zuckermassen zu beheben und eine kontinuierliche Einarbeitung und homogene Verteilung eines Gases, wie z.B. Luft, in kontinuierlich herzustellende Bonbonmassen zu ermöglichen, die stark verringerte Dichte aufweisen, um beispielsweise bei geprägten Bonbons ein besonders gutes Aussehen, einen sogenannten Seidenglanz, und durch die stark verringerte Dichte der Masse gezielt veränderte Durchbeißeigenschaften (Crunch) zu erhalten.

Erfindungsgemäß wird dies dadurch erreicht, daß der Überdruck im Mischerinnenraum durch Regelung des Mischerauslaufes gesteuert und die Druckluft an mehreren, über die Länge des Mischers verteilte Stellen in den Mischerinnenraum geleitet wird, um dadurch im Mischerinnenraum bei der Verarbeitung der Süßwarenmasse über die Länge des Mischer hinweg einen Druckgradienten aufrechtzuerhalten.

Die Vorrichtung zur Durchführung des Verfahrens kennzeichnet sich dabei dadurch, daß im Mischerauslauf eine Regelvorrichtung wie Ventil, Drossel oder dgl. zur Einstellung des Druckes im Mischerraum vorgesehen ist. Die Regelvorrichtung im Mischerauslauf ist erfindungsgemäß zwecks Einstellung des jeweils erforderlichen Druckgradienten stufenlos einstellbar. Andererseits sind im Gehäuse des Mischers über dessen Länge verteilt vorzugsweise mehrere, jeweils einzeln einstellbare Druckluftzuführungen vorgesehen, die mittels Feineinstellventilen unabhängig voneinander ein- und verstellbar sind.

Der Erfindungsgedanke, der die verschiedensten Ausführungsmöglichkeiten zuläßt, ist in den anliegenden Zeichnungen wiedergegeben, und zwar zeigen:

Fig. 1 eine schematische Einstellung einer Koch- und Aufbereitungsanlage für Zuckermassen; und

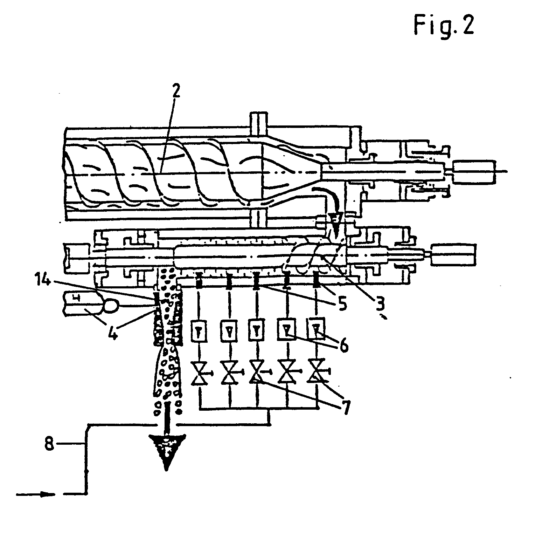

Fig. 2 einen Ausschnitt aus Fig. 1 in vergrößertem Maßstab zwecks besserer Darstellung der Erfindung.

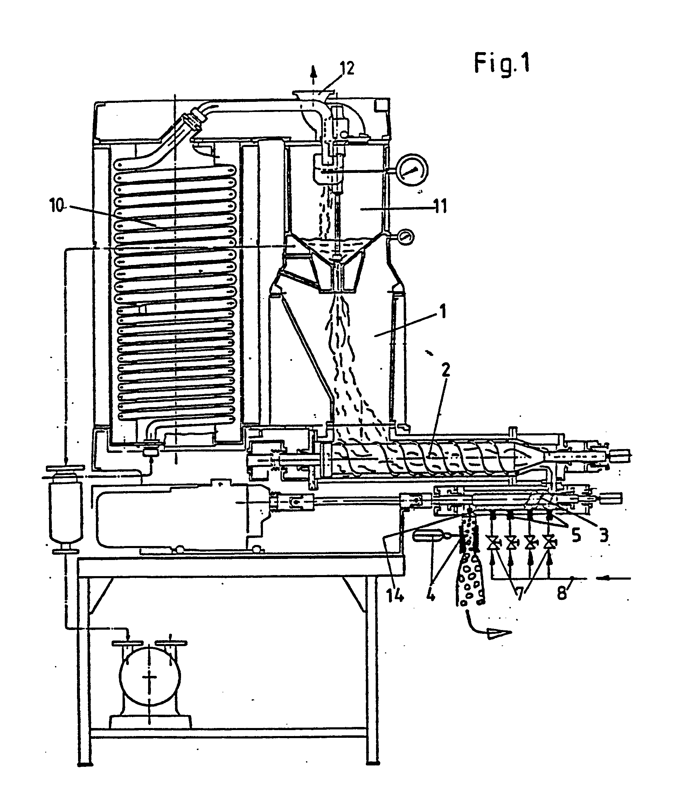

Wie Fig. 1 zeigt, gelangt die Zuckermasse durch eine Kochschlange 10 nach dem Kochen ind den Ausdampfraum 11, in welchem die Brüden (Wrasen) von der gekochten Bonbonmasse getrennt und über einen Brüdenabzug 12 entfernt werden. Die gekochte Bonbonmasse wird kontinuierlich in einen Vakuumraum eingesaugt, wo infolge des geringen absoluten Drucks eine Nachverdampfung nebst daraus resultierender Abkühlung der Bonbonmasse erfolgt.

Anschließend wird die Bonbonmasse, deren Viskosität durch Wasserentzug bei Nachverdampfung und durch Abkühlung angestiegen ist, mit Hilfe der Austragschnecke 2 aus dem Vakuumbereich die nachgeschaltete Mischschnecke 3, gefördert.

In der Mischschnecke 3 werden Aromen, Essenzen und die Farbe in die Bonbonmasse kontinuierlich eingemischt, was aber hier nicht dargestellt ist.

Bei der kontinuierlichen Herstellung von hochbelüfteter Bonbonmasse gemäß der Erfindung, wird das erforderliche Gas, z.B. Druckluft, über eine Leitung 8 und mehrere, z.B. fünf Düsen 5, in das Innere des Gehäuses der Mischschnecke 3 eingeblasen. Die Gasmenge, z.B. Luftmenge, die durch die einzelnen Düsen 5 in die Bonbonmasse im Mischerinnenraum eingeblasen wird, ist für jede Düse 5 mittels Feineinstellventilen 7 separat einstellbar, wobei die der Einstellung entsprechenden Gasmengenwerte, z.B. Luftmengenwerte, an Durchflußmeßgeräten 6 ablesbar sind.

Bestimmend für den Grad der Belüftung der Bonbonmasse bei kontinuierlichem Durchlauf durch die Mischschnecke 3 sind u.a. die Geschwindigkeit, mit der das Gas, z.B. Luft, über die düsen in die Bonbonmasse injiziert wird sowie der Druckgradient bei Durchlauf der Masse durch das den Mischerauslauf 14 bildende Mischerauslaufventil 4, das stufenlos einstellbar ist.

Der zur Aufrechterhaltung des mit dem Mischerauslaufventil 4 eingestellten Druckgradienten erforderliche Mischschneckeninnendruck wird für die zu belüftende Bonbonmasse von der Austragschnecke 2, für das Gas, z.B. Luft, durch ausreichend hohen Netzdruck aufgebracht.

## Patentansprüche

1. Verfahren zur kontinuierlichen Aufbereitung von gekochten und vakuumierten Süßwarenmassen, insbesondere von Bonbonmassen, wie z.B. Weich- oder Hartkaramellmassen oder dgl. in einem Mischer, durch welchen die zu verarbeitenden Massen bei Zufuhr von Druckluft unter Überdruck hindurchlaufen, dadurch gekennzeichnet, daß der Überdruck im Mischerinnenraum durch Regelung des Mischerauslaufes gesteuert und die Druckluft an mehreren über die Länge des Mischers verteilten Stellen in den Mischerinnenraum geleitet wird, um dadurch im Mischerinnenraum bei der Verarbeitung der Süßwarenmasse über die Länge des Mischers hinweg einen Druckgradienten aufrechtzuerhalten.

2. Vorrichtung zur Durchführung des Verfahrens nach Anspruch 1, dadurch gekennzeichnet, daß im Mischerauslauf (14) eine Druckregelvorrichtung (4) vorgesehen ist.

3. Vorrichtung nach Anspruch 2, dadurch gekennzeichnet, daß die Druckregelvorrichtung (4) im Mischerauslauf (14) stufenlos einstellbar ist.

4. Vorrichtung nach Anspruch 3, dadurch gekennzeichnet, daß über die Länge des Mischers (3) verteilt mehrere, jeweils einzeln einstellbare Druckluftzuführungen (5) vorgesehen sind.

5. Vorrichtung nach Anspruch 2 - 4, dadurch gekennzeichnet, daß die Druckluftzuführungen (5) mit, unabhängig voneinander ein- und verstellbare Feineinstellventile (7) versehen sind.

## Claims

1. Method for the continuous processing of cooked and vacuum-treated confectionary masses, in particular sweets masses, such as for example soft or hard caramel masses or the like, in a mixer, through which the masses to be processed pass while compressed air is supplied at excess pressure, characterised thereby, that the excess pressure in the interior mixer space is controlled through regulation of the mixer outlet and the compressed air is conducted into the interior mixer space at several places distributed over the length of the mixer in order thereby to maintain a pressure gradient over the length of the mixer in the interior mixer space during the processing of the confectionary mass.

2. Device for the performance of the method according to claim 1, characterised thereby, that a pressure-regulating device (4) is provided in the mixer outlet (14).

3. Device according to claim 2, characterised thereby, that the pressure-regulating device (4) in the mixer outlet (14) is steplessly settable.

4. Device accoridng to claim 3, characterised thereby, that several compressed air feed ducts (5), which are each settable individually, are provided distributed over the length of the mixer (3).

5. Device according to claim 2 to 4, characterised thereby, that the compressed air feed ducts (5) are provided with fine setting valves (7), which are settable and resettable one independently of the other.

## Revendications

1. Procédé pour la fabrication en continu de masses de sucre cuites et traitées sous vide, en particulier de masses de bonbons, comme par exemple des masses de caramel mou ou dur ou similaires, dans un mélangeur à travers lequel passent les masses à travailler avec apport d'air en surpression, caractérisé par le fait que la surpression dans l'espace intérieur du mélangeur est commandée par la régulation de l'écoulement du mélangeur et que l'air comprimé est introduit dans le mélangeur à plusieurs endroits répartis sur la longueur de celui-ci, afin ainsi de maintenir un gradient de pression dans l'espace intérieur du mélangeur lors de la fabrication de la masse de sucre, sur toute la longueur de ce mélangeur.

2. Dispositif pour l'exécution du procédé selon la revendication 1, caractérisé par le fait qu'un dispositif de régulation de pression (4) est prévu dans la sortie (14) du mélangeur.

3. Dispositif selon la revendication 2, caractérisé par le fait que le dispositif de régulation de pression (4) situé dans la sortie (14) du mélangeur est réglable en continu.

4. Dispositif selon la revendication 3, caractérisé par le fait qu'on prévoit plusieurs dispositifs de distribution (5) d'air comprimé, réglables chacun séparément, répartis sur la longueur du mélangeur (3).

5. Dispositif selon les revendications 2 à 4, caractérisé par le fait que les dispositifs de distribution (5) d'air comprimé sont munis de valves (7) à réglage fin, réglables indépendamment les unes des autres.

Fig.1

Fig.2